# EUROPÄISCHE PATENTSCHRIFT

(11) **EP 3 442 931 B1**
(45) Veröffentlichungstag und Bekanntmachung des Hinweises auf die Patenterteilung: **28.07.2021**
(21) Anmeldenummer: 17717095.8
(22) Anmeldetag: 29.03.2017
(51) Int. Cl.: C07B 49/00, C07F 3/02

(54) **KONTINUIERLICHES VERFAHREN ZUR HERSTELLUNG VON GRIGNARD-ADDUKTEN UND VORRICHTUNG ZU DESSEN DURCHFÜHRUNG**
CONTINUOUS METHOD FOR PRODUCING GRIGNARD ADDUCTS AND A DEVICE FOR CARRYING OUT SAME
PROCÉDÉ CONTINU DE PRODUCTION DE RÉACTIFS DE GRIGNARD ET DISPOSITIF PERMETTANT LA MISE EN OEUVRE DUDIT PROCÉDÉ

(30) Priorität: 13.04.2016 DE 102016206211
(43) Veröffentlichungstag der Anmeldung: 20.02.2019
(73) Patentinhaber: Fraunhofer-Gesellschaft zur Förderung der angewandten Forschung e.V., 80686 München (DE)
(72) Erfinder: MENGES-FLANAGAN, Gabriele, 65375 Oestrich-Winkel (DE); HOFMANN, Christian, 55118 Mainz (DE)
(74) Vertreter: Pfenning, Meinig & Partner mbB
(86) Internationale Anmeldenummer: PCT/EP2017/057383
(87) Internationale Veröffentlichungsnummer: WO 2017/178230

(56) Entgegenhaltungen:
- DE-A1- 19 524 712
- DE-A1- 19 960 865
- US-A1- 2002 161 229
- Mark Veit ET AL: "Reaktionsmühle für Flüssig/Fest Umsetzungen zu Grignardverbindungen", Chemie Ingenieur Technik, vol. 68, 1 January 1996 (1996-01-01), pages 1279-1282, XP55697260,

## Beschreibung

Die Erfindung bezieht sich auf ein kontinuierliches Verfahren zur Herstellung von Grignard-Addukten, bei dem die Magnesiumspäne in-situ mechanisch aktiviert werden. Des Weiteren betrifft die Erfindung eine Vorrichtung zur Durchführung des erfindungsgemäßen Verfahrens.

Unter dem Grignard-Addukt ist erfindungsgemäß eine Verbindung der allgemeinen Formel RMgX zu verstehen, bei dem R ein Alkyl- oder Arylrest und X ein Halogenid ist.

Die Grignard Reaktion ist eine beliebte und häufig angewandte Methode, um C-C-Bindungen zu knüpfen. Durchführung und Reaktionstechnik der Grignard Reaktion sind dabei in den letzten 100 Jahren im Wesentlichen unverändert geblieben.

Üblicherweise wird die Reaktion in einem Satzverfahren, also einem Batch- oder Fed-Batch-Prozess durchgeführt. Ein großer Nachteil hierbei ist jedoch die lange Induktionsphase, die benötigt wird, um Magnesium zu aktivieren. Die Alkyl- oder Arylhalogenide können erst nach der Induktionsphase mit dem aktivierten Magnesium zu der Grignard-Verbindung reagieren. Wurden bis zur Aktivierung des Magnesiums bereits große Mengen der Alkyl- oder Arylhalogenide zugesetzt, muss zudem mit einem stark exothermen und nur schwer zu kontrollierenden Verlauf der Grignard-Adduktbildung gerechnet werden. Dies stellt eine nicht unerhebliche Gefahr für die Prozesssicherheit dar. Darüber hinaus treten bei den Satzverfahren häufig unerwünschte Nebenreaktionen auf und es muss selbst nach vollständiger Zugabe des Halogenids noch unter erhöhter Temperatur nachgerührt werden, um vollständigen Umsatz zu erreichen.

Sowohl bei den Satzverfahren als auch bei den bereits bekannten kontinuierlichen Verfahren muss die Grignard-Reaktion mit speziellen Maßnahmen gestartet werden.

Eine chemische Aktivierung von Magnesium ist beispielsweise aus der US 2,464,685 bekannt. Hier werden die Magnesiumspäne durch den Zusatz von Hilfsreagenz oder bereits produzierter Grignard-Verbindung aktiviert. In der DE 103 04 006 B3 erfolgt die Bildung des Grignard Reagenzes ebenfalls erst unter Zugabe einer Lösung aus dem umzusetzenden Halogenid oder einer Jodlösung. Nicht chemische Maßnahmen zur Aktivierung von Magnesium werden in der GB 669 756 und der DE 195 24 712 beschrieben. Die GB 669 756 betrifft eine kontinuierliche Grignard Reagenz Synthese, bei der Magnesium durch eine im Reaktor fest installierte Schneidevorrichtung in kleinere Stücke zerteilt wird, wobei frische, reaktive Metalloberfläche erzeugt wird. In der DE 195 24 712 wird Ultraschall als Aktivator bei Reaktionen zwischen flüssigen oder gasförmigen und festen Reaktionspartnern genutzt.

Die chemische Aktivierung ist aus verfahrenstechnischer Sicht nachteilig, da diese den Einsatz zusätzlicher Stoffe erfordert. Die zuletzt genannten Aktivierungsmaßnahmen sind hingegen apparativ aufwendig und eignen sich aus diesem Grund nicht für eine großtechnische, industrielle Anwendung.

Es war deshalb Aufgabe der vorliegenden Erfindung, ein Verfahren zur Herstellung von Grignard-Addukten anzugeben, welches kontinuierlich durchgeführt werden kann und bei dem die Vorschrift zur Aktivierung des Magnesiums nicht die aus dem Stand der Technik bekannten Nachteile aufweist. Die Aktivierung soll in dem Verfahren mechanisch erfolgen und ohne den Einsatz von Hilfsreagenzien auskommen.

Des Weiteren war es Aufgabe der vorliegenden Erfindung, eine Vorrichtung zur Durchführung dieses Verfahrens bereitzustellen, die apparativ einfach ist und sich für verschiedene Produktionsmaßstäbe eignet.

Diese Aufgabe wird durch das Verfahren mit den Merkmalen des Anspruches 1 erfüllt. Hinsichtlich der Vorrichtung wird die Aufgabe durch Patentanspruch 10 gelöst. Alle weiteren Ansprüche definieren vorteilhafte Varianten der Erfindung.

Bei dem kontinuierlichen Verfahren zur Herstellung von Grignard-Addukten werden dem Reaktor ein Strom bestehend aus einem Alkyl- oder Arylhalogenid und einem wasserfreien Lösungsmittel und ein weiterer Strom bestehend aus Magnesiumspänen zugespeist. Die Magnesiumspäne werden dabei in dem Reaktor mechanisch durch Reibung aktiviert.

Durch diese Verfahrensführung kann die aktive Grignard-Verbindung ohne den Zusatz weiterer Chemikalien in-situ hergestellt und ohne Zwischenlagerung oder Zeitverzögerung umgesetzt werden. Dies spart einen Prozessschritt (eine unit operation) ein. Außerdem müssen keine weiteren Hilfschemikalien wie im Falle einer chemischen Aktivierung von Magnesium gelagert werden, wodurch sich die Anzahl der Bevorratungsbehälter verringert.

Das erfindungsgemäße Verfahren ermöglicht zudem eine wahrhaft kontinuierliche Prozessführung. Während es in vielen Verfahren aus dem Stand der Technik notwendig ist, den Prozess zu unterbrechen, um frische Magnesiumspäne nachzufüllen, werden die Magnesiumspäne in diesem Verfahren kontinuierlich nachgeführt.

Die Magnesiumspäne weisen vorteilhafterweise eine mittlere Größe von 0,5 bis 3,0 mm auf.

Die mechanische Aktivierung der Magnesiumspäne wird in einer Verfahrensvariante durch Reibung der Magnesiumspäne aneinander erreicht, bevorzugt durch Reibung ausgelöst von Vibrationen, Mahlbewegungen, besonders bevorzugt durch Reibung ausgelöst von Vibrationen mit einer Frequenz von 20 bis 200 Hz.

Durch die Reibung der Magnesiumspäne aneinander wird die Passivierungsschicht, die sich an der Oberfläche der Späne befindet, entfernt. Es sind keine weiteren Maßnahmen zur Aktivierung des Magnesiums nötig. Insbesondere kann auf den Zusatz von Hilfschemikalien verzichtet werden. Eine Verunreinigung der Grignard-Verbindung bzw. des Grignard-Adduktes kann so ausgeschlossen werden. Reinheit und Qualität des Produktes sind dementsprechend verbessert.

Das wasserfreie Lösungsmittel besteht bevorzugt in einem Ether, besonders bevorzugt in Diethylether, 2-Methyl-Tetrahydrofuran, Tetrahydrofuran, deren Mischungen oder deren Mischungen mit anderen organischen Lösungsmitteln, insbesondere Toluol.

Der Reaktor wird in einer Ausführungsform der Erfindung auf eine Temperatur von 10 bis 60 °C, bevorzugt von 25 bis 50 °C, besonders bevorzugt von 30 bis 40°C, temperiert.

Durch die niedrigen bis moderaten Reaktionstemperaturen kann die Reaktion kontrolliert durchgeführt werden. Die Gefahr, dass es zu einem Energieeintrag kommt, der die Reaktionsgeschwindigkeit unerwünscht erheblich erhöht, ist gering.

Außerdem soll das Alkyl- oder Arylhalogenid dem Reaktor bevorzugt in einer Konzentration von 0,5 mol/l bis 5,0 mol/l, besonders bevorzugt in einer Konzentration von 1,0 bis 3,0 mol/l, zugeführt werden.

Die hohen Konzentrationen tragen dazu bei, dass Aufwendungen eingespart werden können. Es ist weniger Lösungsmittel als in vergleichbaren Verfahren aus dem Stand der Technik nötig.

Die mittlere Verweilzeit der Reagenzien im Reaktor soll bevorzugt im Bereich von 1,0 bis 20,0 Minuten, besonders bevorzugt von 3,0 bis 15,0 Minuten, ganz besonders bevorzugt von 5,0 bis 10,0 Minuten, liegen.

Durch die kurzen Verweilzeiten wird auch ohne den Einsatz eines Rührers sichergestellt, dass die Reaktionsmischung gut durchmischt ist. Jedes Volumenelement wird regelmäßig ausgetauscht und es entstehen keine Totzonen.

Die Magnesiumspäne werden vorteilhafterweise so zugespeist, dass im Reaktor ein molarer Überschuss der Magnesiumsspäne im Verhältnis zu dem Alkyl- oder Arylhalogenid vorliegt, bevorzugt ein mindestens 5-facher molarer Überschuss, besonders bevorzugt ein mindestens 15-facher molarer Überschuss, insbesondere ein mindestens 25-facher molarer Überschuss.

Das Verfahren ist bevorzugt dadurch gekennzeichnet, dass das eingesetzte Alkyl- oder Arylhalogenid am Ausgang des Reaktors zu mindestens 90%, bevorzugt zu mindestens 95%, besonders bevorzugt zu mindestens 99%, zu dem Grignard-Addukt oder mit einem dem Reaktor zusätzlich zugespeisten elektrophilen Edukt ausgewählt aus der Gruppe bestehend aus Aldehyden, Ketonen, Carbonsäureestern, Thioestern, Boronsäureestern, Nitrilen, Iminen, Epoxiden, Disulfiden, Kohlendioxid, weiteren Alkyl- oder Arylhalogeniden oder anderen Verbindungen, die aktiven Wasserstoff oder polare Doppelbindungen enthalten, und Mischungen hiervon umgesetzt wird .

Durch den Einsatz des großen Magnesiumüberschusses in Verbindung mit der in-situ Aktivierung des Magnesiums können auch vergleichsweise reaktionsträge Aryl- und Alkylchloride zur Darstellung der Grignard-Verbindung verwendet werden. Dies bedeutet ein erhebliches Einsparungspotential, da Aryl- und Alkylchloride in den meisten Fällen günstiger in der Anschaffung sind als die vergleichbaren Aryl- und Alkylbromide.

Außerdem können unerwünschte Nebenreaktionen durch den hohen Überschuss an Magnesium unterdrückt werden. Eine Kopplung von Edukt und Produkt wird wirksam vermindert.

Die Vorrichtung zur Herstellung von Grignard-Addukten umfasst einen Reaktor mit mindestens einer Temperiervorrichtung, mindestens zwei Zuleitungen und einen Auslass, eine Vorrichtung zur mechanischen Aktivierung und eine Vorrichtung zur kontinuierlichen Förderung der Magnesiumspäne, mindestens einen Magnesiumvorratsbehälter sowie mindestens eine Pumpe zur Förderung des Alkyl- oder Arylhalogenids.

Die Vorrichtung zur mechanischen Aktivierung der Magnesiumspäne besteht vorteilhafterweise in einem Rüttler, einer Vibrations- und/oder einer Mahlvorrichtung und ist an oder im Reaktor angebracht oder mit ihm zur Einbringung der Rüttel- oder Vibrationsbewegung wirksam verbunden ist.

Der Reaktor weist in einer Ausführungsvariante der Erfindung Anschlüsse und/oder Sichtfenster für Analysegeräte und/oder Sensoren, insbesondere für in-line Temperatursensoren, Drucksensoren und/oder optische Analyse- und Anzeigegeräte, auf.

So kann die Reinheit der Verbindungen spektroskopisch verfolgt werden und es kann eine online Qualitätskontrolle erfolgen. Außerdem können die tatsächlichen Werte für Druck, Temperatur festgestellt werden und als Ist- Wert in die entsprechenden Regelkreise zur Steuerung des Verfahren eingespeist werden.

Der Reaktor soll außerdem bevorzugt einen zylindrischen Reaktionsinnenraum, besonders bevorzugt einen Reaktionsinnenraum mit einem geometrischen Verhältnis von Höhe : Durchmesser von 3:1 bis 8:1, besonders bevorzugt einen Reaktionsinnenraum mit einem geometrischen Verhältnis von Höhe : Durchmesser von 4:1 bis 6:1, haben.

Hinsichtlich des Materials ist es bevorzugt, wenn der Reaktor aus Metall, besonders bevorzugt aus Edelstahl, besteht.

Dadurch weist er eine hohe Beständigkeit gegenüber korrosiven Substanzen auf. Diese können entweder in den Edukten oder Produkten enthalten sein oder als Zwischenprodukte in der Grignard-Reaktion auftreten.

Anhand des nachfolgenden Beispiels und der beigefügten Figuren soll das erfindungsgemäße Verfahren näher erläutert werden, ohne dieses auf die Ausführungsform einschränken zu wollen, die sich daraus ergibt.

### Beispielhafte Versuchsvorschrift:

In einen 3D gesinterten Reaktor werden 15 g frische, unbehandelte Magnesiumspäne gefüllt. Anschließend werden die Zuleitungen und ein Thermostat an den Reaktor angeschlossen. Darüber hinaus wird ein Vibrationsmotor wird an dem Reaktor angebracht. Durch Einschalten des Vibrationsmotors werden die Magnesiumspäne im Innenraum des Reaktors zunächst verdichtet. Der Reaktor wird außerdem durch den Thermostat auf eine Temperatur von 55°C vortemperiert, um ein schnelles Anspringen der Grignard-Adduktbildung zu ermöglichen. Dann wird eine wasserfreie Lösung von Phenylbromid in Tetrahydrofuran mit einer Konzentration von 1 mol/L in den Reaktor eingeleitet. Zur Förderung der Lösung wird eine Spritzenpumpe genutzt und die Flussrate wird auf 2 ml/min eingestellt.

In Abständen von wenigen Minuten werden inline-Infrarotspektren aufgenommen, um den Reaktionsverlauf beobachten zu können. Schon das erste Spektrum zeigt einen Peak, der auf die Grignard-Verbindung zurückgeht. Die Reaktion ist also unmittelbar angesprungen. Vollständiger Umsatz wird nach 15 min Laufzeit erreicht.

Während der Start-up Phase wird typischerweise ein Anstieg in der Temperatur beobachtet. Die Position des Temperaturmaximums ist dabei von dem Füllstand mit Magnesiumspänen abhängig. Wenn die Temperatur in der Start-up Phase im Reaktor über die Thermostattemperatur hinaus ansteigt, wird ein leichtes Sieden des Lösungsmittels THF beobachtet. Der Thermostat wird dann entsprechend auf eine niedrigere Temperatur gestellt.

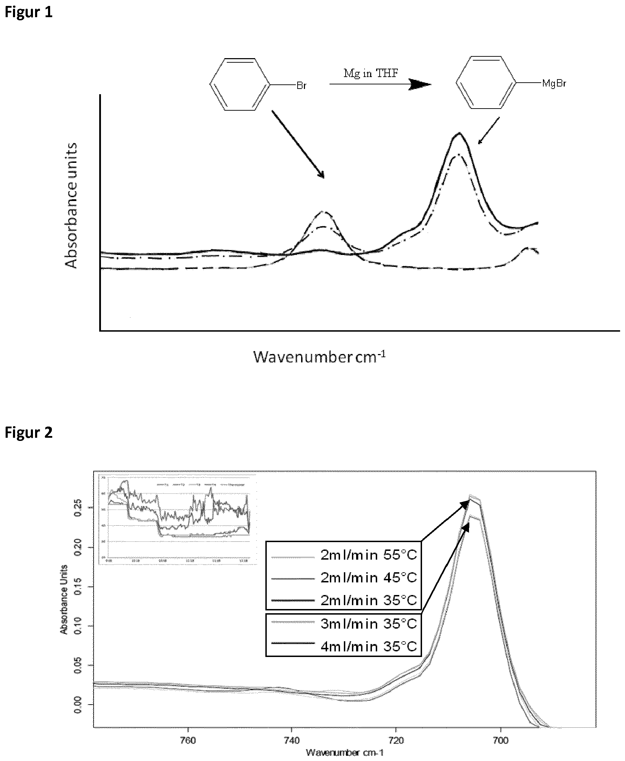

Figur 1 zeigt die Reaktionsgleichung und drei IR Spektren, die zu Beginn des Versuches, nach der Anfahrphase und nach Erreichen vollständigen Umsatzes aufgenommen wurden.

Durch Variation der Flussrate und der Temperatur kann der Prozess optimiert werden. In Figur 2 ist zu sehen, dass bei einer Verdopplung der Flussrate und einer Herabsetzung der Temperatur auf 35°C unvollständiger Umsatz beobachtet wird.

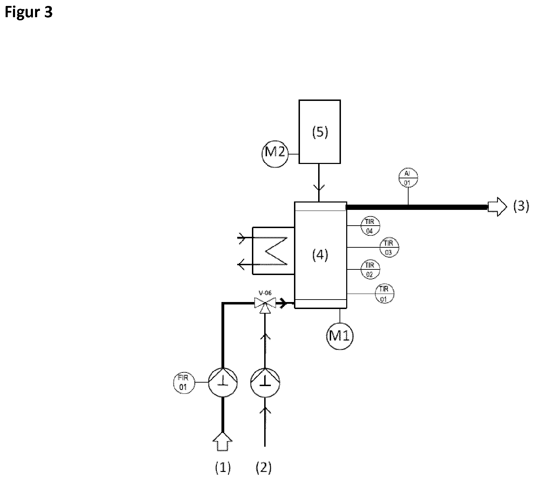

Figur 3 zeigt ein Fließschema für das erfindungsgemäße Verfahren und zeigt, welche Messinstrumente, Analyse- bzw. Anzeigegeräte zur Durchführung des Verfahrens verwendet werden können und an welchen Positionen diese angebracht sind. Außerdem ist gezeigt, dass die Edukte vorzugsweise von unten in den Reaktor 4 eingeleitet werden. Die Alkyl- oder Arylhalogenidlösung wird mit Hilfe einer Pumpe durch die Zuleitung 1 gefördert. Außerdem kann gegebenenfalls eine elektrophile Verbindung über die Zuleitung 2 in den Reaktor 4 geführt werden. Die Magnesiumspäne werden in einem Vorratsbehälter 5 oberhalb des Reaktors 4 vorgehalten. An dem Vorratsbehälter 5 ist eine Vorrichtung zur kontinuierlichen Förderung der Magnesiumspäne M2 angebracht, während an dem Reaktor 4 eine Vorrichtung zur mechanischen Aktivierung der Magnesiumspäne M1 angebracht ist. Das Grignard-Addukt bzw. Reaktionsprodukt wird aus dem oberen Teil des Reaktors 4 an der Leitung 3 entnommen. Die Apparatur ist dadurch gekennzeichnet, dass die Magnesiumspäne im Reaktorraum entgegen der Strömungsrichtung der Lösung nach unten sinken und dort eine Schicht bilden, in der die Späne aneinander anliegen und durch eine Rüttelbewegung Reibung zwischen den Spänen erzeugt wird.

## Patentansprüche

1. Kontinuierliches Verfahren zur Herstellung von Grignard-Addukten, bei dem einem Reaktor ein Strom bestehend aus einem Alkyl- oder Arylhalogenid und einem wasserfreien Lösungsmittel und ein weiterer Strom bestehend aus Magnesiumspänen zugespeist wird, **dadurch gekennzeichnet, dass** die Magnesiumspäne in dem Reaktor mechanisch durch Reibung aktiviert werden.

2. Verfahren nach Anspruch 1, **dadurch gekennzeichnet, dass** die Magnesiumspäne eine mittlere Größe von 0,5 bis 3,0 mm aufweisen.

3. Verfahren nach einem der Ansprüche 1 oder 2, **dadurch gekennzeichnet, dass** die mechanische Aktivierung durch Reibung der Magnesiumspäne aneinander, bevorzugt ausgelöst von Vibrationen oder Mahlbewegungen, besonders bevorzugt ausgelöst von Vibrationen mit einer Frequenz von 20 bis 200 Hz, erfolgt.

4. Verfahren nach einem der vorhergehenden Ansprüche, **dadurch gekennzeichnet, dass** das Lösungsmittel in einem Ether, bevorzugt in Diethylether, 2-Methyl-Tetrahydrofuran, Tetrahydrofuran, deren Mischungen oder deren Mischungen mit anderen organischen Lösungsmitteln, insbesondere Toluol, besteht.

5. Verfahren nach einem der vorhergehenden Ansprüche, **dadurch gekennzeichnet, dass** der Reaktor auf eine Temperatur von 10 bis 60 °C, bevorzugt von 25 bis 50 °C, besonders bevorzugt von 30 bis 40°C, temperiert wird.

6. Verfahren nach einem der vorhergehenden Ansprüche, **dadurch gekennzeichnet, dass** das Alkyl- oder Arylhalogenid in einer Konzentration von 0,5 mol/l bis 5,0 mol/l, bevorzugt in einer Konzentration von 1,0 bis 3,0 mol/l, zugeführt wird.

7. Verfahren nach einem der vorhergehenden Ansprüche, **dadurch gekennzeichnet, dass** die mittlere Verweilzeit der Reagenzien im Reaktor im Bereich von 1,0 bis 20,0 Minuten, bevorzugt von 3,0 bis 15,0 Minuten, besonders bevorzugt von 5,0 bis 10,0 Minuten liegt.

8. Verfahren nach einem der vorhergehenden Ansprüche, **dadurch gekennzeichnet, dass** die Magnesiumspäne so zugespeist werden, dass im Reaktor ein molarer Überschuss der Magnesiumsspäne im Verhältnis zu dem eingesetzten Alkyl- oder Arylhalogenid vorliegt, bevorzugt ein mindestens 5-facher molarer Überschuss, besonders bevorzugt ein mindestens 15-facher molarer Überschuss, insbesondere ein mindestens 25-facher molarer Überschuss.

9. Verfahren nach einem der vorhergehenden Ansprüche, **dadurch gekennzeichnet, dass** das eingesetzte Alkyl- oder Arylhalogenid am Ausgang des Reaktors zu mindestens 90%, bevorzugt zu mindestens 95%, besonders bevorzugt zu mindestens 99% zu dem Grignard-Addukt oder mit einem dem Reaktor zusätzlich zugespeisten elektrophilen Edukt ausgewählt aus der Gruppe bestehend aus Aldehyden, Ketonen, Carbonsäureestern, Thioestern, Boronsäureestern, Nitrilen, Iminen, Epoxiden, Disulfiden, Kohlendioxid, weiteren Alkyl- oder Arylhalogeniden oder anderen Verbindungen, die aktiven Wasserstoff oder polare Doppelbindungen enthalten, und Mischungen hiervon umgesetzt wird.

10. Vorrichtung zur Herstellung von Grignard-Addukten umfassend einen Reaktor mit mindestens einer Temperiervorrichtung, mindestens zwei Zuleitungen und einem Auslass, einer Vorrichtung zur kontinuierlichen Förderung der Magnesiumspäne und einer Vorrichtung zur mechanischen Aktivierung der Magnesiumspäne, mindestens einen Magnesiumvorratsbehälter sowie mindestens einer Pumpe zur Förderung des Alkyl- oder Arylhalogenids.

11. Vorrichtung nach Anspruch 10, **dadurch gekennzeichnet, dass** die Vorrichtung zur mechanischen Aktivierung der Magnesiumspäne in einem Rüttler, einer Vibrations- und/oder einer Mahlvorrichtung besteht und an oder im Reaktor angebracht ist oder mit ihm zur Einbringung der Rüttel- oder Vibrationsbewegung wirksam verbunden ist.

12. Vorrichtung nach Anspruch 10 oder 11, **dadurch gekennzeichnet, dass** der Reaktor Anschlüsse und/oder Sichtfenster für Analysegeräte und/oder Sensoren aufweist, insbesondere in-line Temperatursensoren, Drucksensoren und/oder optische Analyse- oder Anzeigegeräte.

13. Vorrichtung nach einem der Ansprüche 10 bis 12, **dadurch gekennzeichnet, dass** der Reaktor einen zylindrischen Reaktionsinnenraum aufweist, bevorzugt einen Reaktionsinnenraum mit einem geometrischen Verhältnis von Höhe : Durchmesser von 3:1 bis 8:1, besonders bevorzugt einen Reaktionsinnenraum mit einem geometrischen Verhältnis von Höhe : Durchmesser von 4:1 bis 6:1.

14. Vorrichtung nach einem der Ansprüche 10 bis 13, **dadurch gekennzeichnet, dass** der Reaktor aus Metall, bevorzugt aus Edelstahl besteht.

## Claims

1. Continuous method for the production of Grignard adducts, in which a flow consisting of an alkyl- or aryl halide and a water-free solvent and a further flow consisting of magnesium chips are fed to a reactor, **characterised in that** the magnesium chips are activated mechanically in the reactor by friction.

2. Method according to claim 1, **characterised in that** the magnesium chips have an average size of 0.5 to 3.0 mm.

3. Method according to one of the claims 1 or 2, **characterised in that** the mechanical activation is effected by friction of the magnesium chips against each other, preferably triggered by vibrations or grinding movements, particularly preferably triggered by vibrations with a frequency of 20 to 200 Hz.

4. Method according to one of the preceding claims, **characterised in that** the solvent consists of an ether, preferably of diethyl ether, 2-methyl-tetrahydrofuran, tetrahydrofuran, the mixtures thereof or the mixtures thereof with other organic solvents, in particular toluene.

5. Method according to one of the preceding claims, **characterised in that** the reactor is temperature-controlled to a temperature of 10 to 60°C, preferably of 25 to 50°C, particularly preferably of 30 to 40°C.

6. Method according to one of the preceding claims, **characterised in that** the alkyl- or aryl halide is supplied in a concentration of 0.5 mol/l to 5.0 mol/l, preferably in a concentration of 1.0 to 3.0 mol/l.

7. Method according to one of the preceding claims, **characterised in that** the average dwell time of the reagents in the reactor is in the range of 1.0 to 20.0 minutes, preferably of 3.0 to 15.0 minutes, particularly preferably of 5.0 to 10.0 minutes.

8. Method according to one of the preceding claims, **characterised in that** the magnesium chips are fed in such that a molar excess of the magnesium chips is present in the reactor, relative to the alkyl- or aryl halide used, preferably an at least 5-times molar excess, particularly preferably an at least 15-times molar excess, in particular an at least 25-times molar excess.

9. Method according to one of the preceding claims, **characterised in that** the alkyl- or aryl halide used is converted at the output of the reactor up to at least 90%, preferably up to at least 95%, particularly preferably up to at least 99%, to the Grignard adduct or with an electrophilic educt fed in addition to the reactor, selected from the group consisting of aldehydes, ketones, carboxylic acid esters, thioesters, boronic acid esters, nitriles, imines, epoxides, disulphides, carbon dioxide, further alkyl- or aryl halides or other compounds which comprise active hydrogen or polar double bonds, and mixtures hereof.

10. Device for the production of Grignard adducts comprising a reactor with at least one temperature-control device, at least two supply lines and an outlet, a device for continuous conveyance of the magnesium chips and a device for mechanical activation of the magnesium chips, at least one magnesium storage container and also at least one pump for conveying the alkyl- or aryl halide.

11. Device according to claim 10, **characterised in that** the device for mechanical activation of the magnesium chips consists of a shaker, a vibration- and/or a grinding device and is fitted on or in the reactor or effectively connected to it for introducing the shaking or vibration movement.

12. Device according to claim 10 or 11, **characterised in that** the reactor has connections and/or viewing windows for analysis devices and/or sensors, in particular inline temperature sensors, pressure sensors and/or optical analysis- or display devices.

13. Device according to one of the claims 10 to 12, **characterised in that** the reactor has a cylindrical reaction interior, preferably a reaction interior with a geometric ratio of height : diameter of 3 : 1 to 8 : 1, particularly preferably a reaction interior with a geometric ratio of height : diameter of 4 : 1 to 6 : 1.

14. Device according to one of the claims 10 to 13, **characterised in that** the reactor consists of metal, preferably of stainless steel.

## Revendications

1. Procédé continu de production de produits d'addition de Grignard, dans lequel un courant constitué d'un halogénure d'alkyle ou d'aryle et d'un solvant anhydre et un autre courant constitué de copeaux de magnésium sont introduits dans un réacteur, **caractérisé en ce que** les copeaux de magnésium sont activés mécaniquement par friction dans le réacteur.

2. Procédé selon la revendication 1, **caractérisé en ce que** les copeaux de magnésium ont une taille moyenne de 0,5 à 3,0 mm.

3. Procédé selon l'une des revendications 1 et 2, **caractérisé en ce que** l'activation mécanique est obtenue par friction des copeaux de magnésium les uns contre les autres, de préférence induite par des vibrations ou des mouvements de broyage, et en particulier induite par des vibrations d'une fréquence de 20 à 200 Hz.

4. Procédé selon l'une des revendications précédentes, **caractérisé en ce que** le solvant est constitué d'un éther, de préférence d'éther diéthylique, de 2-méthyl-tétrahydrofurane, de tétrahydrofurane, de mélanges de ceux-ci ou de mélanges de ceux-ci avec d'autres solvants organiques, en particulier le toluène.

5. Procédé selon l'une des revendications précédentes, **caractérisé en ce que** le réacteur est thermorégulé à une température comprise entre 10 et 60 °C, de préférence entre 25 et 50 °C, et en particulier entre 30 et 40 °C.

6. Procédé selon l'une des revendications précédentes, **caractérisé en ce que** l'halogénure d'alkyle ou d'aryle est introduit à une concentration de 0,5 mol/l à 5,0 mol/l, de préférence à une concentration de 1,0 à 3,0 mol/l.

7. Procédé selon l'une des revendications précédentes, **caractérisé en ce que** le temps de séjour moyen des réactifs dans le réacteur se situe dans un intervalle de 1,0 à 20,0 minutes, de préférence de 3,0 à 15,0 minutes, et en particulier de 5,0 à 10,0 minutes.

8. Procédé selon l'une des revendications précédentes, **caractérisé en ce que** les copeaux de magnésium sont introduits de telle sorte qu'il y ait un excès molaire de copeaux de magnésium dans le réacteur par rapport à l'halogénure d'alkyle ou d'aryle introduit, de préférence un excès molaire d'au moins 5 fois, en particulier un excès molaire d'au moins 15 fois, et tout particulièrement un excès molaire d'au moins 25 fois.

9. Procédé selon l'une des revendications précédentes, **caractérisé en ce que**, à la sortie du réacteur, au moins 90 %, de préférence au moins 95 % et en particulier au moins 99 % de l'halogénure d'alkyle ou d'aryle introduit sont convertis en produit d'addition de Grignard ou avec un réactif électrophile introduit en sus dans le réacteur et choisi dans le groupe constitué d'aldéhydes, de cétones, d'esters d'acide carboxylique, de thioesters, d'esters d'acide boronique, de nitriles, d'imines, d'époxydes, de disulfures, de dioxyde de carbone, d'autres halogénures d'alkyle ou d'aryle ou d'autres composés contenant de l'hydrogène actif ou des doubles liaisons polaires, ainsi que des mélanges de ceux-ci.

10. Dispositif de production de produits d'addition de Grignard comprenant
un réacteur pourvu d'au moins un dispositif de thermorégulation, d'au moins deux conduites d'alimentation et d'une sortie, d'un dispositif d'acheminement en continu des copeaux de magnésium et d'un dispositif d'activation mécanique des copeaux de magnésium, au moins un réservoir de magnésium et au moins une pompe destinée à acheminer l'halogénure d'alkyle ou d'aryle.

11. Dispositif selon la revendication 10, **caractérisé en ce que** le dispositif d'activation mécanique des copeaux de magnésium consiste en un vibreur, un dispositif vibrant et/ou un dispositif de broyage et est monté sur ou dans le réacteur ou est relié fonctionnellement à celui-ci de manière à transmettre le mouvement de vibration ou de secousse.

12. Dispositif selon la revendication 10 ou 11, **caractérisé en ce que** le réacteur présente des raccords et/ou des fenêtres d'observation pour appareils d'analyse et/ou capteurs, en particulier des capteurs de température en ligne, des capteurs de pression et/ou des appareils optiques d'analyse ou d'affichage.

13. Dispositif selon l'une des revendications 10 à 12, **caractérisé en ce que** le réacteur comporte un espace intérieur de réaction cylindrique, de préférence un espace intérieur de réaction ayant un rapport géométrique hauteur/diamètre de 3:1 à 8:1, et plus particulièrement un espace intérieur de réaction ayant un rapport géométrique hauteur/diamètre de 4:1 à 6:1.

14. Dispositif selon l'une des revendications 10 à 13, **caractérisé en ce que** le réacteur est en métal, de préférence en acier inoxydable.
